# EUROPÄISCHE PATENTSCHRIFT

(11) **EP 2 311 891 B1**
(45) Veröffentlichungstag und Bekanntmachung des Hinweises auf die Patenterteilung: **07.08.2013**
(21) Anmeldenummer: 09173303.0
(22) Anmeldetag: 16.10.2009
(51) Int. Cl.: C08G 73/00, C08G 18/79

(54) **Viskositätsstabilisator für Hot-Melts**
Viscosity stabiliser for hot-melts
Stabilisateur de viscosité pour matière thermoplastique

(43) Veröffentlichungstag der Anmeldung: 20.04.2011
(73) Patentinhaber: Rhein Chemie Rheinau GmbH, 68219 Mannheim (DE)
(72) Erfinder: Scheffner, Christian, 69207 Sandhausen (DE); Kray, Bernd, 67346 Speyer (DE); Laufer, Wilhelm, 67158 Ellestadt (DE); Schuster, Peter, 67122 Altrip (DE); Uestuenbas, Serdar, 68189 Mannheim (DE); Leimenstoll, Marc, 40721 Hilden (DE); Reichert, Peter, 41541 Dormagen (DE); Mayer, Eduard, 41539 Dormagen (DE); Wintermantel, Matthias, 51465 Bergish Gladbach (DE)
(74) Vertreter: Siegers, Britta

(56) Entgegenhaltungen:
- EP-A1- 1 586 442
- EP-A2- 1 650 238
- DE-A1-102007 027 851
- DE GENOVA R.; HARPER M.D., CLAY W.A., CRANLEY P.E., HUNTER M.K.: "Use of liquid MDI products for polyurethane reactive hot-melt resins" TAPPI, Bd. 79, Nr. 11, 1. Januar 1996 (1996-01-01), Seiten 196-202, XP002564775

## Beschreibung

Die Erfindung betrifft die Verwendung von mindestens einem polymeren Carbodiimid auf Basis von Tetramethylenxylylendiisocyanat als Viskositätsstabilisatoren für Hot-Melts.

Reaktive Polyurethan-Hotmelts sind eine stark wachsende Produktgruppe innerhalb der Anwendungen von Polyurethanen auf dem Klebstoffgebiet. Für ihren Aufbau werden vorzugsweise lineare Polyester- und/oder Polyetherpolyole in Kombination mit einem Überschuss an Polyisocyanaten, vorzugsweise Diisocyanaten, verwendet.

Die Vorteile dieser Produktklasse liegen vor allem in der Abwesenheit von Lösungsmittel, der Möglichkeit die Produkte in der Wärme mit relativ niedrigen Viskositäten zu applizieren, trotzdem hohe Anfangsfestigkeiten zu erhalten und nach relativ kurzer Zeit wegen der weiteren Reaktion mit Feuchtigkeit Klebverbindungen mit sehr hohem, weit über den Applikationstemperaturen liegendem Wärmestand und exzellenten Lösemittelbeständigkeiten zu erhalten.

Reaktive Schmelzklebstoffsysteme werden meist in Fässern an der Prozessstrasse bereitgestellt. In diesen Fässern wird der Schmelzklebstoff dann z.B. über spezielle Fasswärmer aufgeschmolzen. Je nach Prozess und Equipment erfahren somit die reaktiven PUR-Hotmeltsysteme erhebliche, zum Teil lang anhaltende Temperaturbelastungen. Diese anhaltende Temperaturbelastung hat nachteiligerweise einen deutlichen Anstieg der Schmelzviskosität des Schmelzklebstoffes und die Abnahme des NCO-Gehaltes aufgrund von Nebenreaktionen, welche die noch freien NCO-Gruppen im PU-Hotmeltsystem bei erhöhten Temperaturen eingehen können, zur Folge.

Da reaktive Hotmelts zudem als Schmelze aufgetragen werden, muss auch in diesem Stadium gewährleistet sein, dass keine Viskositätserhöhung stattfindet.

Aus Sicht des Endanwenders sind daher prinzipiell reaktive Schmelzklebstoffsysteme wünschenswert, die über ausgezeichnete Viskositätsstabilitäten in der Wärme verfügen.

Aus DE-A 1 005 726 und DE 10 2007 027 851 A1 sind Carbodiimide als stabilisierendes Mittel gegenüber Wärme und Wasser, d.h. zum Hydrolyseschutz für mit Polyisocyanaten modifizierten Polyester-Massen homogener oder poröser Struktur, bekannt. Hier konnte festgestellt werden, dass insbesondere die Stauchhärte von Polyurethanschäumen durch Zusatz von Tetramethylen-ω-ω'-bis-tert.-butylcarbodiimid im Gegensatz zu carbodiimidfreien Schäumen keinen bzw. nur einen geringen Abfall in den mechanischen Werten bei 12-tägiger Lagerung bei 70 °C/95% rel. F. zeigt. DE-A 1 005 726 beschäftigt sich jedoch ausschließlich mit der Hydrolysestabilität, die keine Rückschlüsse auf die Viskositätsstabilität bei höherer Temperatur liefert.

Ein Hinweis auf den Einfluss von monomeren Carbodiimiden auf die Stabilität der Schmelzviskosität von isocyanatterminierten Prepolymeren unter Temperaturbelastung findet sich in Tappi Journal 1996, S. 196 - 202. Die untersuchten monomeren Carbodiimidverbindungen basieren auf monomeren 4,4'-MDI und verfügen folglich über freie reaktive NCO-Gruppen. Es konnte herausgefunden werden, dass die Zunahme der Schmelzviskosität bei Lagerungen bei 80 °C über 4 Wochen gegenüber einem auf 4,4'-MDI basierten Standard PUR- System weniger stark für das System mit monomerem Carbodiimid anstieg. Des Weiteren wurde der Viskositätsanstieg bei einer 2-stündigen Dauertemperaturbelastung von 121 °C gegenüber des Standardsystems von rund 10 %/h auf rund 4 %/h durch Verwendung von monomeren Carbodiimid reduziert. Diese sind großtechnisch nur bedingt einsetzbar, da diese ausgasen können und weniger migrationsbeständig sind.

Das im vorgenannten Tappi Journal untersuchte monomere Carbodiimid weist zudem freie reaktive NCO-Gruppen auf. Damit können diese Verbindungen nicht als Polyolstabilisatoren eingesetzt werden, ohne dass eine Reaktion mit dem Polyol erfolgt. Somit wird das mittlere Molekulargewicht und folglich die Viskosität der Polyolkomponente erhöht. Dies ist vor dem Hintergrund eines optimalen Herstellungsprozesses nachteilig.

Das Dokument EP 1 650 238 A2 offenbart die Verwendung von Polycarbodiimiden in Harz-Zusammensetzungen. In Absatz [0067] wird erläutert, dass die Polycarbodiimide als Viskositätsstabilisatoren verwendet werden.

Aufgabe der vorliegenden Erfindung war daher die Bereitstellung von Viskositätsstabilisatoren für Hot-Melts, die die Nachteile des Standes der Technik nicht aufweisen.

Es wurde nun überraschend gefunden, dass sich polymere Carbodiimide auf Basis von Tetramethylenxylylendiisocyanat hervorragend als Viskositätsstabilisator für Hot-Melts eignen.

Gegenstand der vorliegenden Erfindung ist somit die Verwendung von mindestens einem polymeren Carbodiimid (A) auf Basis von Tetramethylenxylylendiisocyanat als Viskositätsstabilisator für Hot-Melts.

Unter Hot-Melts im Sinne der Erfindung werden alle Arten von Schmelzklebstoffen verstanden und PUR-Hot-Melts umfassen alle Arten von reaktiven Schmelzklebstoffe,

Unter polymeren Carbodiimiden (A) werden im Rahmen der vorliegenden Erfindung im wesentlichen linearen Polycarbodiimide verstanden, welche im Mittel mindestens zwei Carbodiimidgruppen je Molekül aufweisen.

Bei dem Carbodiimid (A) im Sinne der Erfindung handelt es sich dabei vorzugsweise um eine Verbindung der Formel

X₁-R₁-[-N=C=N-R₂-]ₘ-N=C=N-R₃-X₂,

in der R₁, R₂ und R₃ unabhängig voneinander C₆- C₂₄- substituierte aromatische Kohlenwasserstoffreste bedeuten und
m einen Wert von mindestens 1, vorzugsweise 2-10, besonders bevorzugt 3-5 hat,
X₁ und X₂ unabhängig voneinander Wasserstoff oder 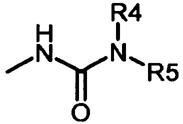 und/oder 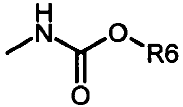 sind und
R₄, R₅, R₆ = C₁- C₂₄-gegebenenfalls substituierte aliphatische, C₅- C₂₄- substituierte cycloaliphatische oder C₆- C₂₄- substituierte aromatische Kohlenwasserstoffreste sind.

Des Weiteren ist bevorzugt, dass der Viskositätsstabilisator vorzugsweise solche Carbodiimide (A) enthält, die über keine freien und somit reaktiven Isocyanat-Gruppen verfügen. Diese Carbodiimide, die über keine freien und somit reaktiven Isocyanat-Gruppen verfügen, werden hergestellt durch die Zugabe eines stöchiometrischen Überschusses (bezogen auf -NCO) von Monoalkoholen, wie z.B. Polyethylenglykole (z.B. PEG550, PEG300). Dabei ist eine OH-Zahl von 8 mg KOH/g bis 20 mg KOH/g bevorzugt.

Bei den vorgenannten Carboddiimiden handelt es sich um handelsübliche Komponenten, die z.B. bei der Firma Rhein Chemie Rheinau GmbH erhältlich sind, z.B. unter dem Handelsnamen Stabaxol® P 200 als polymeres Carbodiimid auf Basis von Tetramethylenxylylendiisocyanat, gegebenenfalls mit Monoalkoholen endgekappt, d.h. ohne freie und somit reaktive Isocyanat-Gruppen.

Ein weiterer Gegenstand der vorliegenden Erfindung ist die Verwendung mindestens eines erfindungsgemäßen Viskositätsstabilisators (A) in Hot-Melts, welche sich dadurch auszeichnen, dass diese mindestens ein Polyesterpolyol und/oder Polyetherpolyol (B) und mindestens ein Isocyanat (C) enthalten.

Unter dem Polyester-/Polyether-Polyole (B) wird im Rahmen der vorliegenden Erfindung ein Polyol mit mehr als einer OH-Gruppe, bevorzugt zwei endständigen OH-Gruppen verstanden. Solche Polyole sind dem Fachmann bekannt. Bevorzugt werden Polyesterpolyole. Sie können auf bekanntem Wege hergestellt werden, beispielsweise aus aliphatischen Hydroxycarbonsäuren oder aus aliphatischen und/oder aromatischen Dicarbonsäuren und einem oder mehreren Diolen. Es können auch entsprechende Derivate eingesetzt werden, wie z.B. Lactone, Ester von niederen Alkoholen oder Anhydride. Beispiele für geeignete Ausgangsprodukte sind Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure, Phthalsäureanhydrid, Ethylenglykol, Diethylenglykol, 1,4-Butandiol, 1,6-Hexandiol, Neopentylglykol und/oder ε-Caprolacton.

Polyesterpolyole sind bei Raumtemperatur entweder flüssig (Glasübergangstemperatur Tg < 20°C) oder fest. Bei Raumtemperatur feste Polyesterpolyole sind dabei entweder amorph (Glasübergangstemperatur Tg > 20°C) oder kristallisierend.

Geeignete kristallisierende Polyester sind beispielsweise solche auf Basis linearer aliphatischer Dicarbonsäuren mit mindestens 2 Kohlenstoffatomen, bevorzugt mindestens 6 Kohlenstoffatomen, besonders bevorzugt 6 bis 14 Kohlenstoffatomen im Molekül, wie z.B. Adipinsäure, Azelainsäure, Sebacinsäure und Dodecandisäure, vorzugsweise Adipinsäure und/oder Dodecandisäure sowie linearen Diolen mit mindestens 2 Kohlenstoffatomen, bevorzugt mindestens 4 Kohlenstoffatomen, besonders bevorzugt 4 - 6 Kohlenstoffatomen im Molekül, vorzugsweise mit einer geraden Anzahl von Kohlenstoffatomen wie beispielsweise 1,4-Butandiol und 1,6-Hexandiol. Ebenso sind die Polycaprolactonderivate, basierend auf bifunktionellen Startmolekülen, wie beispielsweise 1,6-Hexandiol, als besonders geeignet zu nennen.

Geeignete amorphe Polyesterpolyole sind beispielsweise solche auf Basis von Adipinsäure, Isophthalsäure, Terephthalsäure, Ethylenglykol, Neopentylglykol und/oder 3-Hydroxy-2,2-dimethylpropyl-3-hydroxy-2,2-dimethylpropanoat.

Geeignete bei Raumtemperatur flüssige Polyesterpolyole sind beispielsweise solche auf Basis von Adipinsäure, Ethylenglykol, 1,6-Hexandiol und/oder Neopentylglykol.

Als Polyetherpolyol geeignet sind die in der Polyurethan-Chemie üblichen Polyether, wie beispielsweise die unter Verwendung von zwei- bis sechswertigen Startermolekülen, wie beispielsweise Wasser, Ethylenglykol, 1,2- oder 1,3-Propylenglykol, Neopentylglykol, Glycerin, Trimethylolpropan, Pentaerythrit, Sorbit oder 1- bis 4-NH-Bindungen aufweisenden Aminen, hergestellten Additions- oder Mischadditionsverbindungen des Tetrahydrofurans, Styroloxids, Ethylenoxids, Propylenoxids, der Butylenoxide oder des Epichlorhydrins, vorzugsweise des Ethylenoxids und/oder des Propylenoxids. Vorzugsweise sind die bifunktionellen Propylenoxid- und/oder Ethylenoxid-Addukte sowie Polytetrahydrofuran zu nennen. Solche Polyetherpolyole und ihre Herstellung sind dem Fachmann bekannt.

Bei den vorgenannten Polyester- und/oder Polyether-Polyolen (B) handelt es sich um handelsübliche Komponenten, die z.B. der BayerMaterial Science AG oder der Evonik Degussa AG erhältlich sind.

Als Isocyanatkomponente C) geeignet sind beispielsweise Verbindungen mit Isocyanatgehalten von 5 bis 60 Gew.-% (bezogen auf das Isocyanat) mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und/oder 2,6-Diisocyanatotoluol (TDI), 2,2'-, 2,4'- und/oder 4,4'-Diisocyanatodiphenylmethan (MDI), 1,5-Diisocyanatonaphthalin, 1,3- und 1,4-Bis-(isocyanatomethyl)-benzol oder Mischungen dieser. Selbstverständlich können auch Polyisocyanate verwendet werden.

Als Diiscocyanatkomponente C) bevorzugte Diisocyanate sind 1,6-Diisocyanatohexan (HDI), 1-Isocyanato-3,3,5-trimethyl-5-isocyanatomethylcyclohexan (Isophorondiisocyanat, IPDI), 4,4'-Diisocyanatodicyclohexylmethan, 2,4- und/oder 2,6-Diisocyanatotoluol (TDI), 2,2'-, 2,4'- und/oder 4,4'-Diisocyanatodiphenylmethan (MDI).

Als Diiscocyanatkomponente C) besonders bevorzugte Diisocyanate sind 2,4'- und/oder 4,4'-Diisocyanatodiphenylmethan (MDI).

Bei den vorgenannten Isocyanaten (C) handelt es sich um handelsübliche Komponenten, die z.B. bei der BayerMaterial Science AG unter dem Handelsnamen Desmodur® 44 M erhältlich sind.

Vorzugsweise weisen die erfindungsgemäßen schmelzviskositätsstabilen Hot-Melts ein molares Verhältnis von Isocyanat (NCO) C) zu Polyester- und/oder Polyetherpolyol (OH) B) von > 1 und Carbodiimidkonzentrationen (A), bezogen auf das Polyol (B), von 0,05 Gew.-% bis 10 Gew.-%, auf.

Die mit mindestens einem polymeren Carbodiimid (A) versetzten schmelzviskositätsstabilen Hot-Melts können noch mit weiteren Additiven versehen sein.

In einer weiteren Ausführungsform der Erfindung enthalten die schmelzviskositätsstabilen Hot-Melts als weitere Additive mit Feuchtigkeit aktivierende Katalysatoren, anorganische oder organische Füllstoffe, Farbstoffe, Antioxidantien, Harze, reaktiven oder nichtreaktive Polymere und/oder Strecköle.

Die schmelzviskositätsstabilen Hot-Melts lassen sich vorzugsweise dadurch herstellen, dass der Viskositätsstabilisator (A) zu mindestens einem Polyester und/oder Polyether (B) und/oder mindestens einem Isocyanat (C) oder dem Umsetzungsprodukt aus mindestens einem Polyester und/oder Polyether (B) und mindestens einen Isocyanat (C) zu gegeben wird.

Die schmelzviskositätsstabilen Hot-Melts sind aber auch erhältlich durch Umsetzung von
- mindestens einem C₆ - C₂₄- aromatischen, C₁- C₂₄- aliphatischen, C₇- C₂₄-araliphatischen und/oder C₅ - C₂₄- cycloaliphatischen Diisocyanat (C), bevorzugt mit einem Gehalt an freien NCO-Gruppen von 5 bis 60 Gew.-%, besonders bevorzugt von 20 bis 55 Gew.-%, ganz besonders bevorzugt von 30 bis 50 Gew.-% (bezogen auf (C))
   und
- einem Polyesterpolyol und/oder Polyetherpolyol (B) enthaltend das erfindungsgemäße Carbodiimid (A), erhältlich durch
   a) Mischen der Polyesterpolyol und/oder Polyetherpolyol (B) mit dem erfindungsgemäßen Carbodiimid (A) bei Temperaturen von 0 °C bis 200 °C, bevorzugt 25 °C bis 150 °C, besonders bevorzugt 80°C bis 120 °C, mit Carbodiimidkonzentrationen bezogen auf das Polyesterpolyol und/oder Polyetherpolyol (B) von 0,05 Gew.-% bis 10 Gew.-%, bevorzugt, 0,5 Gew.-% bis 5 Gew.-%, besonders bevorzugt 0,8 Gew.-% bis 3,5 Gew.-% bei einer Mischzeit von 0,1 min bis 240 min, bevorzugt 1 min bis 180 min, besonders bevorzugt 5 min bis 120 min.
wobei das Verhältnis von C zu B so gewählt wird, dass das molare Verhältnis von NCO zu OH > 1, bevorzugt von 1,2 bis 4,0, besonders bevorzugt von 1,3 bis 3,0 beträgt.

Die Herstellung der reaktiven Polyurethansysteme und/oder Zubereitungen erfolgt beispielsweise derart, dass zunächst das Polyesterpolyol und/oder Polyetherpolyol B) mit dem erfindungsgemäßen Carbodiimid A) bei Temperaturen von 0 °C bis 200 °C, bevorzugt 25 °C bis 150 °C, besonders bevorzugt 80 °C bis 120 °C, mit Carbodiimidkonzentrationen bezogen auf das Polyol von 0,05 Gew.-% bis 10 Gew.-%, bevorzugt, 0,5 Gew.-% bis 5 Gew.-%, besonders bevorzugt 0,8 Gew.-% bis 3,5 Gew.-% bei einer Mischzeit von 0,1 min bis 240 min, bevorzugt 1 min bis 180 min, besonders bevorzugt 5 min bis 120 min unter Rühren gemischt werden und dann mit einem Überschuss an Polyisocyanaten C) vermischt werden, wobei das Verhältnis von (C) zu (B) so gewählt wird, dass das molare Verhältnis von NCO zu OH > 1, bevorzugt von 1,2 bis 4,0, besonders bevorzugt von 1,3 bis 3,0 beträgt, die homogene Mischung abgefüllt wird oder bis zum Erhalt eines konstanten NCO-Wertes, gerührt wird und dann abgefüllt wird. Als Reaktionstemperatur werden 60 bis 150°C, vorzugsweise 80 bis 130°C, gewählt.

Selbstverständlich kann die Herstellung der reaktiven Polyurethansysteme und/oder Zubereitungen auch kontinuierlich in einer Rührkesselkaskade oder geeigneten Mischaggregaten, wie beispielsweise schnelldrehenden Mischern nach dem Rotor-Stator-Prinzip oder einem Statikmischer, erfolgen.

Es ist selbstverständlich möglich, die Polyester- und/oder Polyetherpolyole oder einen Teil derselben mit einem Unterschuss an Diisocyanaten (C), vorzugsweise 1,6-Diisocyanatohexan (HDI), 2,4- und/oder 2,6-Diisocyanatotoluol (TDI) und/oder 2,4'- und/oder 4,4'- Diisocyanatodiphenylmethan (MDI), zu modifizieren und nach beendeter Reaktion die urethangruppenhaltigen Polyole mit einem Überschuss von Diisocyanaten zu einem Isocyanatgruppen enthaltendem Hotmelt umzusetzen.

Ebenso ist es möglich, die Umsetzung das Polyesterpolyol und/oder Polyetherpolyol (B) mit den Diisocyanaten (C) in Gegenwart von bis zu 5 Gew.-% von beispielsweise Trimerisaten aliphatischer Diisocyanate, wie z.B. HDI, durchzuführen oder solche Trimerisate nach beendeter Prepolymerisation zuzusetzen.

Ein weiterer Gegenstand der vorliegenden Erfindung ist zudem die Verwendung der erfindungsgemäßen Viskositätsstabilisatoren in Klebstoffen.

Darüber hinaus ist ein weiterer Gegenstand der vorliegenden Erfindung ist die Verwendung der erfindungsgemäßen schmelzviskositätsstabilen Hot-Melts als Dichtstoff, Schaumstoff, als Klebstoff, insbesondere zur Beschichtung, als Schmelzklebstoff, als Montageklebstoff zur vorläufigen Fixierung von Bauteilen, als Buchbindeklebstoff, als Klebstoff für die Herstellung von Kreuzbodenventilsäcken, zur Herstellung von Verbundfolien und Laminaten, als Kaschierklebstoff oder als Kantenumleimer und zur Beschichtung.

Die Verbesserung der Stabilität der Schmelzviskosität bei erhöhter Temperatur durch den Zusatz von Carbodiimiden (A) wird anhand der nachfolgenden Beispiele demonstriert, ohne dass die Erfindung dabei auf die Beispiel beschränkt ist.

### Ausführungsbeispiele:

Sofern nicht abweichend vermerkt beziehen sich alle Prozentangaben auf Gewichtsprozent.

In den Beispielen und Vergleichsbeispielen wurden die folgenden Rohstoffe verwendet:

### Carbodiimide (A):

Stabaxol® P 200 Rhein Chemie Rheinau GmbH, Mannheim, DE.

### Polyesterpolyol (B):

Eingesetzt wurde ein Polyesterpolyol auf Basis von Adipinsäure und 1,6-Hexandiol mit einer Hydroxyzahl von etwa 30 mg KOH/g und einer Säurezahl von etwa 0,5 mg KOH/g, erhalten von der Firma Bayer MaterialScience AG mit den Handelsnamen Baycoll® AD5027.

### Isocyanat I (C):

Desmodur^{®} 44M (4,4'-Diphenylmethandiisocyanat) erhältlich bei Bayer MaterialScience AG.

### Herstellung der reaktiven Polyurethan-Hotmelts (Beispiele und Vergleichsbeispiele):

In einem 2 L-Planschliffbecher werden die in Tabelle 1 angegebenen Anteile an Polyesterpolyol vorgelegt, bei 130 °C aufgeschmolzen und dann 1h bei 130 °C und 15 mbar (+/- 10 mbar) Unterdruck entwässert. Das entwässerte Polyesterpolyol wird dann mit der entsprechenden Menge an Carbodiimid unter den aus Tabelle 1 ersichtlichen Bedingungen versetzt. Anschließend gibt man die entsprechende Stoffmenge an Isocyanat I hinzu. Nach einer Einrührzeit von 20 min werden die Produkte in Alukartuschen abgefüllt und diese Luftdicht verschlossen. Die Kartuschen werden dann 4h bei 100 °C im Umlufttrockenschrank getempert.

**Tabelle 1: Zusammensetzung der Beispiele und des Vergleichsbeispiels**

| **Bezeichnung** | | **Beispiel 1** | **Beispiel 2** | **Vergleichsbeispiel 1** |
|---|---|---|---|---|
| **Polyesterpolyol** | [Gew.-%] | 83,4 | 84,8 | 85,5 |
| **Carbodiimid** | [Gew.-%] | 0,7 | 0,7 | 0,0 |
| Einwirkzeit | [min.] | 120 | 5 | - |
| Einwirktemperatur | [°C] | 80 | 80 | - |
| Konzentration Carbodiimid C in dem Polyesterpolyol | [Gew.-%] | 0,83 | 0,83 | 0,0 |
| **Isocyanat I** | [Gew.-%] | 14,8 | 14,5 | 14,5 |
| **NCO Gehalt (theoretisch)** | [Gew.-%] | 3,0 | 3,0 | 3,0 |
| **Kennzahl** | | 2,51 | 2,62 | 2,61 |

### Charakterisierung der reaktiven Polyurethan-Hotmelts:

Vor der Untersuchung werden die Produkte, welche in Alu-Kartuschen abgefüllt sind, in einem Umluftheizschrank bei ca. 125 °C ca. 30 min lang aufgeschmolzen. Die Charakterisierung der viskoelastischen Eigenschaften der reaktiven Polyurethan-Hotmelts erfolgt mit dem MCR 301 Rheometer der Firma Anton-Paar. Verwendet wurde das Spindel/Messbechersystem Z4 und CC27. Die Viskosität wurde scherratenabhängig aufgenommen und über den Carreau-Yasuda Algorithmus ausgewertet. Der Viskositätsschnelltest wurde am selben Gerät durchgeführt. Hierfür wurde die Probe bei 120 °C über 2h vermessen (2h Test). Die Nullviskosität wurde über Extrapolation bestimmt und daraus die Viskositätssteigerung in %/h errechnet.

Der NCO-Gehalt wurde nach DIN EN 1242 bestimmt.

### Bestimmung der Hydrolysestabilität der reaktiven Polyurethan-Hotmelts:

Die Hotmelts der Beispiele 1 - 2 und des Vergleichsbeispiels 1 werden als Film mit einer nach der DIN EN ISO 527-1,3 definierten Schichtstärke 14 Tage bei Normklima ausgehärtet. Aus diesem gehärteten Film werden S2 Prüfkörper ausgestanzt und diese für 24 Stunden bei 60 °C unter Wasser gelagert. Nach Entnahme werden die Prüfkörper 24 Stunden bei Normklima rekonditioniert. Anschließend werden die Proben bei 87°C und 95% rel. Feuchtigkeit für 0, 3, 5, 8, 14, 19, 27 und 31 Tage gelagert. Die mechanische Festigkeit der Proben wird über den Zugversuch nach DIN EN ISO 527-1,3 ermittelt.

Dabei wurden die in Tabelle 2 aufgeführten Ergebnisse erzielt.

**Tabelle 2: Rheologische und mechanische Eigenschaften der Beispiele und des Vergleichsbeispiels**

| **Bezeichnung** | | **Beispiel 1** | **Beispiel 2** | **Vergleichsbeis piel 1** |
|---|---|---|---|---|
| **Viskosität bei** | | | | |
| 100°C | [mPa*s] | 7498 | 7428 | 8032 |
| 130°C | [mPa*s] | 3117 | 3144 | 3342 |
| **Viskositätszunahme (2h Test)** | [%/h] | 4,7 | 6,1 | 10,0 |
| **Zugfestigkeiten** | | | | |
| nach 87 °C/ 95% rel. F. | | | | |
| **0 Tage** | [MPa] | 38 | 37 | 34 |
| **3 Tage** | [MPa] | 37 | 36 | 35 |
| **5 Tage** | [MPa] | 37 | 35 | 25 |
| **8 Tage** | [MPa] | 37 | 32 | 14 |
| **14 Tage** | [MPa] | 16 | 32 | 0 |
| **19 Tage** | [MPa] | 10 | 32 | 0 |
| **27 Tage** | [MPa] | 0 | 13 | 0 |
| **31 Tage** | [MPa] | 0 | 11 | 0 |

### Diskussion der Ergebnisse:

Tabelle 2 zeigt, dass die Hydrolysebeständigkeit der erfindungsgemäßen Beispiele 1 bis 2 durch Verwendung von Carbodiimid im Vergleich zum System des Standes der Technik (Vergleichsbeispiel 1) signifikant verbessert werden kann.

Des Weiteren ist zu erkennen, dass die Stabilität der Schmelzviskosität der erfindungsgemäßen Beispiele 1 bis 2 durch Verwendung von Carbodiimid im Vergleich zu Systemen des Standes der Technik (Vergleichsbeispiel 1) ebenfalls signifikant verbessert werden kann. So kann die Zunahme der Schmelzviskosität durch Verwendung von beispielsweise 0,83 Gew.-% Carbodiimid (Beispiel 1) gegenüber dem System des Standes der Technik (Vergleichsbeispiel 1) um 5,3 %/h verringert werden.

## Patentansprüche

1. Verwendung von mindestens einem polymeren Carbodiimid (A) auf Basis von Tetramethylenxylylendiisocyanat als Viskositätsstabilisator für Hot-Melts.

2. Verwendung nach Anspruch 1, **dadurch gekennzeichnet, dass** es sich bei dem Carbodiimid (A) um eine Verbindung der Formel
X₁-R₁-[-N=C=N-R₂-]ₘ-N=C=N-R₃-X₂
handelt,
in der R₁, R₂ und R₃
unabhängig voneinander C₆- C₂₄- substituierte aromatische Kohlenwasserstoffreste bedeuten und
m einen Wert von mindestens 1 hat,
X₁ und X₂ unabhängig voneinander 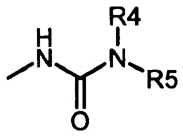 und/oder 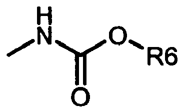 bedeuten,
und
R₄, R₅, R₆ = C₁- C₂₄-gegebenenfalls substituierte aliphatische, C₅- C₂₄- substituierte cycloaliphatische oder C₆- C₂₄- substituierte aromatische Kohlenwasserstoffreste sind.

3. Verwendung nach einem oder mehreren der Ansprüche 1 bis 2, **dadurch gekennzeichnet, dass** diese Carbodiimiden (A) über keine freien reaktiven Isocyanat-Gruppen verfügen.

4. Verwendung nach einem oder mehreren der Ansprüche 1 bis 3, **dadurch gekennzeichnet, dass** diese Hot-Melts mindestens ein Polyester- und/oder Polyetherpolyol (B), mindestens ein Isocyanat (C) enthalten.

5. Verwendung nach Anspruch 4, **dadurch gekennzeichnet, dass** diese ein molares Verhältnis von Isocyanat (NCO) C) zum Polyester- und/oder Polyetherpolyol (OH) B) von > 1 und Carbodiimidkonzentrationen, bezogen auf das Polyol, von 0,05 Gew.% bis 10 Gew.-% aufweisen.

6. Verwendung nach Anspruch 4 oder 5, **dadurch gekennzeichnet, dass** diese als weitere Additive mit Feuchtigkeit aktivierende Katalysatoren, anorganischen oder organische Füllstoffe, Farbstoffe, Antioxidantien, Harze, reaktiven oder nichtreaktive Polymere und/oder Strecköle enthalten.

7. Verwendung der Hot-Melts nach einem der Ansprüche 1 bis 6 in Klebstoffen.

8. Verwendung der schmelzviskositätsstabilen Hot-Melts nach einem der Ansprüche 1 bis 6 zur Beschichtung, als Dichtstoff, Schaumstoff, als Klebstoff, als Schmelzklebstoff, als Montageklebstoff zur vorläufigen Fixierung von Bauteilen, als Buchbindeklebstoff, als Klebstoff für die Herstellung von Kreuzbodenventilsäcken, zur Herstellung von Verbundfolien und Laminaten, als Kaschierklebstoff oder als Kantenumleimer und/oder zur Beschichtung.

## Claims

1. Use of at least one polymeric carbodiimide (A) based on tetramethylenexylylene diisocyanate as a viscosity stabilizer for hotmelts.

2. Use according to Claim 1, **characterized in that** the carbodiimide (A) is a compound of the formula
X₁-R₁-[-N=C=N-R₂-]ₘ-N=C=N-R₃-X₂,
in which R₁, R₂ and R₃ independently of one another are substituted C₆-C₂₄ aromatic hydrocarbon radicals and
m has a value of at least 1,
X₁ and X₂ independently of one another are 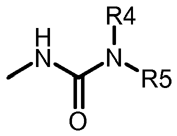 and/or 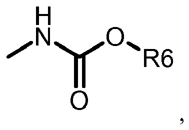 and
R₄, R₅ and R₆ = optionally substituted C₁-C₂₄ aliphatic, substituted C₅-C₂₄ cycloaliphatic or substituted C₆-C₂₄ aromatic hydrocarbon radicals.

3. Use according to one or more of Claims 1 to 2, **characterized in that** these carbodiimides (A) possess no free reactive isocyanate groups.

4. Use according to one or more of Claims 1 to 3, **characterized in that** these hotmelts comprise at least one polyester polyol and/or polyether polyol (B), at least one isocyanate (C).

5. Use according to Claim 4, **characterized in that** they have a molar ratio of isocyanate (NCO) C) to the polyester polyol and/or polyether polyol (OH) B) of > 1 and carbodiimide concentrations, based on the polyol, of 0.05% by weight to 10% by weight.

6. Use according to Claim 4 or 5, **characterized in that** they comprise, as further additives, catalysts which activate with moisture, organic or inorganic fillers, colorants, antioxidants, resins, reactive or unreactive polymers and/or extender oils.

7. Use of the hotmelts according to any of Claims 1 to 6 in adhesives.

8. Use of the melt-viscosity-stable hotmelts according to any of Claims 1 to 6 for coating, as sealant, as foam, as adhesive, as hotmelt adhesive, as assembly adhesive for provisional fixing of components, as bookbinding adhesive, as adhesive for producing cross-bottom valve bags, for producing composite films and laminates, as a laminating adhesive or as edgebanding adhesives and/or for coating.

## Revendications

1. Utilisation d'au moins un carbodiimide polymère (A) à base de tétraméthylènexylylènediisocyanate comme stabilisant de viscosité pour masses thermofusibles.

2. Utilisation selon la revendication 1, **caractérisée en ce qu'**il s'agit, pour le carbodiimide (A), d'un composé de formule
X₁-R₁-[-N=C=N-R₂-]ₘ-N=C=N-R₃-X₂, dans laquelle R₁, R₂ et R₃ signifient, indépendamment les uns des autres, des radicaux hydrocarbonés aromatiques en C₆-C₂₄ substitués et
m a une valeur d'au moins 1,
X₁ et X₂ représentent, indépendamment l'un de l'autre 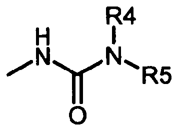 et/ou 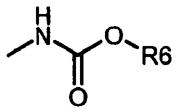 et
R₄, R₅, R₆ = des radicaux hydrocarbonés aliphatiques en C₁-C₂₄ le cas échéant substitués, des radicaux hydrocarbonés cycloaliphatiques en C₅-C₂₄ substitués ou des radicaux hydrocarbonés aromatiques en C₆-C₂₄ substitués.

3. Utilisation selon l'une ou plusieurs des revendications 1 à 2, **caractérisée en ce que** les carbodiimides (A) ne disposent pas de groupes isocyanates réactifs libres.

4. Utilisation selon l'une ou plusieurs des revendications 1 à 3, **caractérisée en ce que** ces masses thermofusibles contiennent au moins un polyesterpolyol et/ou polyétherpolyol (B), au moins un isocyanate (C).

5. Utilisation selon la revendication 4, **caractérisée en ce qu'**elles présentent un rapport molaire d'isocyanate (NCO) C) à polyesterpolyol et/ou polyétherpolyol (OH) B) > 1 et des concentrations en carbodiimide, par rapport au polyol, de 0,05% en poids à 10% en poids.

6. Utilisation selon la revendication 4 ou 5, **caractérisée en ce qu'**elles contiennent, comme autres additifs, des catalyseurs activables par l'humidité, des charges inorganiques ou organiques, des colorants, des antioxydants, des résines, des polymères réactifs ou non réactifs et/ou des huiles d'allongement.

7. Utilisation des masses thermofusibles selon l'une quelconque des revendications 1 à 6 dans des adhésifs.

8. Utilisation des masses thermofusibles stables du point de vue de la viscosité de la masse fondue selon l'une quelconque des revendications 1 à 6 pour le revêtement, comme substance d'étanchéité, comme mousse, comme adhésif, comme adhésif en masse fondue, comme adhésif de montage pour la fixation provisoire de pièces, comme adhésif pour la reliure de livres, comme adhésif pour la fabrication de sacs à valve à fond croisé, pour la fabrication de feuilles composites et de stratifiés, comme adhésif de contrecollage ou comme chants thermocollants et/ou pour le revêtement.
